(19) Europäisches Patentamt
European Patent Office
Office européen des brevets

(11) Veröffentlichungsnummer: **0 028 379**
**B1**

(12) **EUROPÄISCHE PATENTSCHRIFT**

(45) Veröffentlichungstag der Patentschrift: **20.02.85**

(51) Int. Cl.⁴: **C 09 B 67/42,** D 06 P 1/00

(21) Anmeldenummer: **80106540.0**

(22) Anmeldetag: **24.10.80**

(54) **Granulate wasserlöslicher Farbstoffe, Verfahren zur Herstellung und Verwendung zum Färben.**

(30) Priorität: **30.10.79 CH 9702/79**

(43) Veröffentlichungstag der Anmeldung:
**13.05.81 Patentblatt 81/19**

(45) Bekanntmachung des Hinweises auf die Patenterteilung:
**20.02.85 Patentblatt 85/08**

(84) Benannte Vertragsstaaten:
**BE CH DE FR GB LI NL**

(56) Entgegenhaltungen:
**DE-A-2 616 639**
**DE-A-2 716 478**
**FR-A-2 277 127**
**FR-A-2 373 592**
**FR-A-2 373 593**
**FR-A-2 388 028**
**FR-A-2 405 983**
**GB-A-1 254 730**
**GB-A-2 018 835**

(73) Patentinhaber: **CIBA-GEIGY AG**
**Postfach**
**CH-4002 Basel (CH)**

(72) Erfinder: **Bruttel, Beat, Dr.**
**Ob den Reben 5**
**CH-4461 Böckten (CH)**
Erfinder: **Schneider, Hansjörg**
**Zihlackerstrasse 36**
**CH-4153 Reinach (CH)**
Erfinder: **Dörfel, Werner H.**
**Aumattstrasse 122**
**CH-4153 Reinach (CH)**

(74) Vertreter: **Berg, Wilhelm, Dr. et al**
**Patentanwälte Dr. Berg Dipl.-Ing. Stapf Dipl.-Ing. Schwabe Dr. Dr. Sandmair Postfach 86 02 45**
**Stuntzstrasse 16**
**D-8000 München 86 (DE)**

(56) Entgegenhaltungen:
**RESEARCH DISCLOSURE, Band 169, 1978, Seite 17 Industrial Opportunies Ltd. Havant Hants, G.B. "Granulierung von wasserlöslichen Farbstoffen"**

**EP 0 028 379 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung von Granulaten wasserlöslicher Farbstoffe in einem Wirbelbett sowie, als industrielles Erzeugnis, die gemäss dem Verfahren erhaltenen Granulate.

Aus der DE—OS 27 16 478 ist das Granulieren von wasserlöslichen Farbstoffen aus einem wässrigen Slurry gegebenenfalls in Gegenwart von Siedesalz in einem Wirbelbett bekannt und in der DE—OS 26 16 639 ist ein Verfahren zur Herstellung von Aufbaugranulaten von Farbstoffen bzw. optischen Aufhellern unter Verwendung eines spezifischen Haftmittels, welches zwischen 50 bis 150°C erweicht oder schmilzt, beschrieben. Man kann jedoch nach diesen Verfahren keine Granulate erhalten, die den Anforderungen der Praxis genügen.

Ein Verfahren zur Herstellung von Schmelzgranulaten ist in der FR—A—22 77 127 angegeben. Danach wird der Farbstoff in der Hitze in einen geschmolzenen organischen Träger, z.B. Polyäthylenglykol gelöst. Nach Erkalten der Schmelze erhält man einen Festkörper, der mechanisch zerkleinert wird. Ferner lassen sich auch mittels Sprühtrocknung Farbstoffgranulate herstellen. Ein derartiges Verfahren ist in der FR—A—23 73 593 beschrieben.

Um eine langanhaltende Staubbindung zu erreichen, wird hier vorgeschlagen, den zu formulierenden Farbstoff als wässrige Suspension zusammen mit einem Haftmittel und einem Entstaubungsmittel in einen Zerstäubungstrockner einzudüsen, wobei das Entstaubungsmittel auch nachträglich zugegeben werden kann. Die nach dieser Methode erhaltenen Sprühgranulate sind relativ leicht und porös.

Es wurde nun gefunden, dass beim Zusetzen von spezifischen Granulierhilfsmitteln Granulate von wasserlöslichen Farbstoffen im Wirbelbett erhalten werden, die überraschenderweise eine verbesserte mechanische Stabilität und Rieselfähigkeit, geringere Staubbildung und ein wesentlich höheres Schüttgewicht gegenüber den üblicherweise hergestellten Pulvern bzw. Zerstäubungsgranulatformen bei gleichzeitiger guter Benetzbarkeit und Löslichkeit, sogar in kaltem Wasser aufweisen. Die Granulate sind leicht dispergierbar, führen zu stabilen Dispersionen und ergeben egale Färbungen.

Die Erfindung betrifft somit ein Verfahren zur Herstellung von Granulaten von wasserlöslichen Farbstoffen, indem man mindestens ein Granulierhilfsmittel mit einem Erweichungspunkt bzw. Erweichungsbereich zwischen 30 und 150°C, bestehend aus

a) mindestens einer Verbindung der Formel I

$$A-(CH_2CH_2O)_n-H \qquad (I)$$

in der A die Gruppe R—O— oder

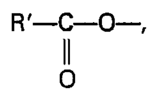

R einen 8 bis 22 Kohlenstoffatome aufweisenden aliphatischen oder alicyclischen Kohlenwasserstoffrest, R' einen 8 bis 22 Kohlenstoffatome aufweisenden aliphatischen Kohlenwasserstoffrest, und n 10 bis 200, vorzugsweise 20 bis 150, bedeuten oder

b) einer Mischung aus einer Verbindung der Formel II

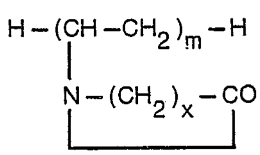

(II)

in der m 50 bis 500 und x 3 bis 5 bedeuten, mit einer Verbindung der Formel III

$$R_1-NH-CO-NH-R_1 \qquad (III)$$

in der $R_1$ unabhängig voneinander Wasserstoff oder Methyl bedeutet, oder

c) einer Mischung einer Verbindung der Formel I mit mindestens einer Verbindung der Formel II oder III auf ein Wirbelbett, enthaltend mindestens einen wasserlöslichen Farbstoff und gebebenenfalls das Granulierhilfsmittel und/oder weitere Zusätze, sprüht, wobei das Granulierhilfsmittel bzw. -hilfsmittelgemisch vor der Zugabe und/oder während des Aufenthaltes im Wirbelbett über seinen Erweichungspunkt bzw. Erweichungsbereich erwärmt wird.

Das Granulierhilfsmittel bzw. -hilfsmittelgemisch weist einen Erweichungspunkt bzw. Erweichungsbereich zwischen 30 und 150°C, vorzugsweise zwischen 40 und 100°C auf und wird in Mengen von 5 bis 50, vorzugsweise 10 bis 30 Gew.-%, bezogen auf den Farbstoff, verwendet.

Neben diesen Granulierhilfsmitteln können auch weitere Zusätze vorhanden sein, wie insbesondere Coupagemittel in Mengen von 0,1 bis 50 Gewichtsprozent, bezogen auf den zu granulierenden Farbstoff, wie Natriumchlorid oder Natriumsulfat, oder auch Netzmittel, Dispergatoren und Staubbindemittel.

Gegenstand der Erfindung, sind ferner die nach dem erfindungsgemässen Verfahren erhaltenen Farbstoffgranulate.

Als wasserlösliche Farbstoffe kommen beispielsweise saure und basische Farbstoffe, wie Metallkomplex-, Chromierungs-, Entwicklungs- und Beizenfarbstoffe sowie vor allem Reaktivfarbstoffe in Frage. Es handelt sich insbesondere um sulfosäure- bzw. carbonsäuregruppenhaltige metallfreie oder metallhaltige und metallisierbare Mono-, Dis- und Polyazofarbstoffe, Formazanfarbstoffe, Anthrachinon-, Nitro-, Methin-, sauer Triphenylmethan-, Xanthon-, Naphthazarin, Chinophthalon- und Phthalocyaninfarbstoffe, sowie vorzugsweise um solche Farbstoffe, die mindestens einen Faserreaktiven Rest im Farbstoffmolekül aufweisen, wie insbesondere heterocyclische Gruppen oder eine Acylgruppe von einer Carbonsäure, wobei diese Gruppen mindestens ein unter Färbebedingungen abspaltbares Halogenatom aufweisen.

Als wasserlösliche Metallkomplexfarbstoffe kommen sulfonsäure-bzw. carbonsäuregruppenhaltige Metallkomplexfarbstoffe, beispielsweise 1:1 oder 1:2 Metallkomplexe von Azo- oder Azomethinfarbstoffen oder metallisierte Phthalocyanine, insbesondere Kupfer- und Nickelphthalocyanine, in Betracht. Bei den 1:1 und 1:2 -Metallkomplexen handelt es sich vorzugsweise um 1:1-Nickelkomplexe, 1:1 Kobaltkomplexe, 1:1-Kupferkomplexe, 1:1-Chromkomplexe, 1:1-Eisenkomplexe oder um symmetrische oder asymmetrische 1:2-Kobaltkomplexe, 1:2-Eisenkomplexe oder 1:2-Chromkomplexe von insbesondere o-Carboxy-o-hydroxy-, o-Hydroxy-o'-amino- oder o,o'-Dihydroxyazofarbstoffen des Benzol-azo-benzol-, Naphthalin-azo-naphthalin-, Benzol-azo-naphthalin-, Benzol-azo-pyridon- oder Benzol-azoacetessigsäureamid-Typs, wobei diese Gruppierungen unsubstituiert oder auch substituiert sein können. Als Substituenten kommen z.B. in Betracht: gegebenenfalls substituierte Sulfonsäureamide oder Sulfone, Halogen oder Nitro.

Die erfindungsgemäss verwendeten Kupfer- und Nickelphthalocyanine leiten sich von den üblichen Gemischen verschiedener Sulfonierungsgrade ab und enthalten vorzugsweise 2 bis 3 oder auch 4 sulfatierte Sulfonsäure-β- oder -γ-hydroxyalkylamidgruppen, können daneben aber auch einzelne Halogene und einzelne Sulfonsäureamidgruppen enthalten, wobei diese Sulfonsäureamidgruppen am Stickstoff unsubstituiert oder substituiert sein können, beispielsweise durch nieder Alkyl, wie Methyl, Aethyl, Propyl, Butyl, oder niedere Hydroxyalkylgruppen, wie 2-Hydroxyäthyl, 2-Hydroxypropyl, 3-Hydroxypropyl.

Beim vorliegenden Verfahren verwendet man die sulfonsäuregruppenhaltigen azofarbstoffe vorzugsweise in Form ihrer Metallsalze, z.B. der Kalium- oder vor allem Natriumsalze. Vorzugsweise handelt es sich um wasserlösliche Reaktivfarbstoffe, insbesondere um reaktive saure Azo- oder Anthrachinonfarbstoffe.

Geeignete faserreaktive Gruppen sind z.B. heterocyclische Gruppen oder eine Acylgruppe von einer Carbonsäure, wobei diese Gruppen mindestens ein abspaltbares Halogenatom aufweisen. Es handelt sich beispielsweise um die folgenden Gruppen: s-Triazinylreste, die am Triazinring ein oder zwei Halogenatome, wie Chlor-, Fluor- oder Bromatome tragen, Pyrimidylreste, die ein bis drei Halogenatome wie Chlor- und/oder Fluoratome bzw. eine oder zwei Arylsulfonyl- oder Alkansulfonylgruppen am Pyrimidinring tragen, Dichlorchinoxylinyl-, 2-chlorbenzthiazolyl-, Chloracetylaminogruppen oder α,β-Dibrompropionylaminogruppen.

Desweiteren kommen als faserreaktive Gruppen z.B. noch in Frage Halogencyclobutan-, Mono- oder Bis-(γ-Halogen-β-hydroxypropyl)-aminogruppen, β-Halogenäthylsulfamidreste, β-Halogenäthoxygruppen, β-Halogenäthylmercaptogruppen, γ-Halogen-β-hydroxy-propylsulfamidreste oder 2,3-Epoxypropylgruppen.

Die Farbstoffe können gegebenenfalls auch in Mischungen miteinander oder gegebenenfalls mit Farbstoffen von einem anderen Typ vorliegen.

Die erfindungsgemäss verwendbaren Farbstoffe sind bekannt und können nach an sich bekannten Methoden hergestellt werden.

Aliphatische Kohlenwasserstoffreste R und R' der Granulierhilfsmittel der Formel I sind gesättigte oder ungesättigte, geradkettige oder verzweigte Kohlenwasserstoffreste, die sich von aliphatischen Alkoholen und Säuren mit 8 bis 22, vorzugsweise 8 bis 20 Kohlenstoffatomen ableiten.

Alicyclische Kohlenwasserstoffreste R sind vor allem polycyclische Reste von alicyclischen Alkoholen, wie Hydroabietylalkohol.

Verbindungen der Formel I in der A die Gruppe R—O— bedeutet, sind Umsetzungsprodukte aus 10 bis 200, vorzugsweise 20 bis 150 Mol Aethylenoxid mit höheren Alkoholen mit 8 bis 22 Kohlenstoffatomen, wie Decyl-, Lauryl-, Tridecyl-, Myristyl-, Cetyl-, Stearyl-, Oleyl-, Arachidyl- oder Behenylalkohol; insbesondere Umsetzungsprodukte aus 35 bis 80 Mol Aethylenoxid mit höheren Alkoholen wie z.B. 18 Kohlenstoff atome aufweisenden, geradkettigen gesättigten oder ungesättigten Alkohole, wie das Umsetzungsprodukt aus Oleyalkohol und 80 Mol Aethylenoxid oder aus Stearylalkohol und 35 Mol Aethylenoxid; ferner Umsetzungsprodukte aus alicyclischen Alkoholen mit 80 bis 120 Mol Aethylenoxid wie Hydroabietylalkohol veräthert mit 100 Mol Aethylenoxid.

Verbindungen der Formel I in der A die Gruppe

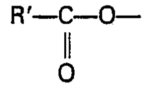

bedeutet, sind Umsetzungsprodukte aus 10 bis 200, vorzugsweise 20 bis 150 Mol Aethylenoxid mit geradkettigen aliphatischen Säuren wie Fettsäuren, z.B. Capryl-, Caprin-, Laurin-, Myristin-, Palmitin-, Stearin-, Arachin-, Behen-, Kokosfett ($C_8$—$C_{18}$), Decen-, Dodecen-, Tetradecen-, Hexadecen-, Olein-, Linol-, Linolen-, Ricinolein-, Eikosen-, Dokosen- oder Clupanodonsäure; insbesondere das Kondensationsprodukt aus Oelsäure und 20 Mol Aethylenoxid.

Verbindungen der Formel II sind insbesondere Polyvinylcaprolactam und vorzugsweise Polyvinylpyrrolidone mit einem Molgewicht bis ca. 40'000 und Verbindungen der Formel III sind Harnstoff und N,N'-Dimethylharnstoff.

Als erfindungsgemäss verwendbare Granulierhilfsmittel verwendet man vorteilhaft Verbindungen der Formel I, allein oder im Gemisch mit einer verschiedenen Verbindung der Formel I oder mit einer Verbindung der Formel II oder III oder ein Gemisch einer Verbindung der Formel II mit einer Verbindung der Formel III. Von besonderem Interesse sind diese Gemische wenn sie als eutektische Mischung vorliegen, wobei der Erweichungspunkt bzw. Erweichungsbereich der Mischung zwischen 30 und 150°C, vorzugsweise zwischen 40 und 100°C liegt. Bevorzugt sind Verbindungen der Formel I.

Bei den erfindungsgemäss verwendbaren Granulierhilfsmittelgemischen handelt es sich z.B. um ein Gemisch aus einer Verbindung der Formel I, worin A die Gruppe

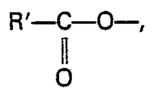

R' einen 8 bis 22 Kohlenstoffatom aufweisenden, ungesättigten, geradkettigen Kohlenwasserstoffrest und n 10 bis 30 bedeuten, mit Harnstoff, gegebenenfalls im Gemisch mit schmelzpunktherabsetzenden Zusätzen, vor allem um ein Gemisch aus einem Kondensationsprodukt aus Oelsäure mit 20 Mol Aethylenoxid mit Harnstoff, gegebenenfalls im Gemisch mit schmelzpunktherabsetzenden Zusätzen oder um ein Gemisch aus einer Verbindung der Formel II, worin × 3 ist, und m die oben angegebene Bedeutung hat, mit Harnstoff, gegebenenfalls im Gemisch mit schmelzpunktherabsetzenden Zusätzen.

Die zu granulierenden Farbstoffe liegen vorteilhaft in trockener Form vor, z.B. als Rohware, als zerstäubungsgetrocknete oder in konventioneller Art getrocknete Ware z.B. im Mahltrockner getrocknete Pulver.

Man verwendet zweckmässig 5 bis 50 Teile, vorzugsweise 10 bis 30 Teile des Granulierhilfsmittels auf 100 Teile des zu granulierenden Rohfarbstoffes.

Ferner ist es zweckmässig, dass die Partikelgrösse aller Komponenten in einem engen Bereich (z.B. 30 bis 150 µm) liegt, um somit einen gleichmässigen Kornaufbau zu gewährleisten.

Die erfindungsgemässen Granulate werden vorzugsweise kontinuierlich in einer Wirbelschicht-Anlage, wie sie beispielsweise aus der DE—OS 2 231 445 bekannt ist, hergestellt, wobei man der wasserlöslichen Farbstoff gegebenenfalls zusammen mit den weiteren Zusätzen in einem Wirbelbett vorlegt und kontinuierlich oder absatzweise das Granulierhilfsmittel vorteilhaft als Schmelze einsprüht, unter Aufrechterhaltung des Wirbelbettes, aus diesem kontinuierlich oder absatzweise körniges Material entnimmt, wobei das Wirbelbett mit warmer Luft, vorteilhaft ca. 5 bis 10°C über den Erweichungspunkt bzw. -bereich des Granulierhilfsmittels liegend, durchströmt wird. Das so entnommene Material wird dann vorzugsweise gesichtet, indem die Grobanteile mit einem Durchmesser grösser als 5 mm, gegebenenfalls nach Zerkleinerung sowie die Feinanteile mit einem Durchmesser kleiner als ca. 0,1 mm wieder in das Wirbelbett kontinuierlich oder absatzweise zurückgeführt werden. Die Teilchen mit einer Grösse zwischen 0,1 bis 2 mm stellen den bevorzugten Anteil der erfindungsgemässen Präparat dar und sind zur Verwendung als Farbstoffpräparate besonders geeignet.

Das Verfahren eignet sich auch für zerstäubungsgetrocknete Pulver, da damit eine Verbesserung des Lösungsverhaltens (Benetzung), der Rieselfähigkeit und vor allem des Staubverhaltens und des Schüttgewichts gegenüber der zerstäubungsgetrockneten Ware erreicht wird.

Das Wirbelbett wird durch einen Gasstrom erzeugt, der vorzugsweise eine Eingangstemperatur von 35 bis 300°C aufweist, wobei die Temperatur im Wirbelbett vorteilhaft 50 bis 100°C beträgt.

Die Wirbelbett-Druckdifferenz ($\Delta p$) beträgt dabei vorzugsweise 50 bis 150 mm Wassersäule (WS) und die Strömungsgeschwindigkeit 0,5 bis 3 m/sec.

Die Wirbelbett-Temperaturdifferenz ($\Delta T$) liegt normalerweise im Bereich von 5 bis 15°C. Die Leistung kann je nach Apparatur und Produkt entsprechend angepasst werden. Vorteilhaft wird eine Apparatur mit 2,5 $m^2$ Siebbodenfläche verwendet, die mit einer Leistung von 100 bis 400 Kilogramm kontinuierlichen Ausstoss an granuliertem Produkt pro Stunde gefahren wird. Die angegebene Leistung wird durch Zugabe von entsprechenden Mengen pulverförmigen Ausgangsprodukt und Granulierhilfsmittel ins Wirbelbett erreicht.

Man erhält nach diesem Verfahren staubarme bis staubfreie Granulate von einer Korngrösse zwischen 50 und 5000 µm, vor allem zwischen 100 und 2000 µm, die sich auszweichnen durch eine einheitliche

formstabile Korngrösse und relativ hohes Schüttgewicht, durch eine hohe mechanische Festigkeit, durch ihre Rieselfähigkeit und durch ihr gutes Löseverhalten, wie Benetzung und Dispergierbarkeit, sogar in kaltem Wasser. Insbesondere bilden sie beim Transport und bei der Verarbeitung keinen Staub. Diese Eigenschaft behalten sie auch beim Lagern über mehrere Monate, z.B. 6 bis 12 Monate, bei einer Temperatur von −10°C bis +50°C.

Die erfindungsgemässen Farbstoff-Granulate sind besonders geeignet zur Herstellung von wässrigen Färbeflotten und Druckpasten, welche zum Färben und Bedrucken der verschiedensten für die jeweilige Farbstoffklasse geeigneten Materialien verwendet werden können.

Das Zeichnungsblatt gibt einen Ueberblick über die bevorzugte Ausführungsform des erfindungsgemässen Verfahrens.

In den nachfolgenden Beispielen, welche die Erfindung erläutern, bedeuten Teile Gewichtsteile. Die Temperaturen sind in Grad Celsius angegeben. Die Farbstoffe liegen als Alkalisalz, vor allem als Natriumsalz vor. Die Bezeichnung staubarm bei den Präparaten bedeutet, dass praktisch keine Teilchen mit einer Grösse unter 50 µm vorhanden sind.

Zur Bestimmung des Staubverhaltens wird folgender Staubtest durchgeführt:

Auf einen Metallzylinder von 500 ccm Inhalt wird ein Metalltrichter mit einem lichten Durchmesser von 10 cm und einem Rohr (lichter Durchmesser 15 mm) gesetzt, dessen unteres Rohrende bis zur 200 ccm-Grenze des Zylinders reicht. Auf der Höhe von 400 ccm des Zylinders wird ein gelochter Papier-Rundfilter (Schleicher und Schüll LS14) befestigt, das mit Wasser derart angefeuchtet ist, dass das Filterpapier nur mässig feucht, aber nicht triefend nass ist. Dann werden 10 g der zu prüfenden Substanz durch den Trichter rasch eingeschüttet, 3 Minuten gewartet, der Trichter herausgenommen und das Papierrundfilter durch Durchschneiden entfernt. Dieses Filterpapier wird dann durch eine 5-stufige Bewertungsskala wie folgt bewertet:

Note 1 = stark stäubend, wenn Papierrundfilter stark getönt bis intensiv gefärbt ist.

Note 2 = erheblich stäubend, wenn Papierundfilter schwach getönt ist,

Note 3 = mässig stäubend, wenn sich auf dem Papierrundfilter viele Farbflecken, die sich teilweise berühren, befinden;

Note 4 = schwach stäubend, wenn sich auf dem Papierrundfilter Farbstofftupfen, aber keine zusammenhängenden Farbflecken befinden;

Note 5 = staubarm, wenn der Papierrundfilter eine kaum sichtbare Anfärbung oder höchstens vereinzelte Farbstofftupfen aufweist.

Zur Bestimmung der Kaltwasserlöslichkeit der Farbstoff-Granulate wird folgender Test durchgeführt:

Eine bestimmte Menge (in g) vom zu prüfenden Farbstoff-Granulat wird in 200 ml entsalztes Wasser bei 20°C in einem 400 ml Becherglas unter Rühren (Magnetrührer bei 750 U/Min.) gegeben und 5 Minuten gerührt. Dann wird die Farbstoff-Lösung durch einen Papierfilter (SS 1450 CV Durchmesser 7 cm) filtriert und mit 50 ml entsalztem Wasser gespült.

Als Kaltwasserlöslichkeit wird die höchste Konzentration des Farbstoffes im Wasser bewertet, die keinen Filterrückstand ergibt.

Beispiel 1:

Im Wirbelbett werden 400 g einer homogenen pulverförmigen Mischung folgender Zusammensetzung vorgelegt:

86 Teile des Farbstoffes der Formel

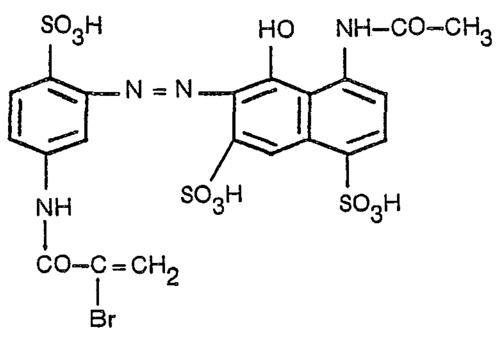

5 Teile Natriumsulfat und

9 Teile Dextrin.

Das Wirbelbett wird durchströmt mit Luft mit einer Lufttemperatur von 50° ± 5°. Aus einer im oberen Teil der Wirbelkammer angebrachten Düse wird eine Schmelze des Granulierhilfsmittels von dem Kondensationsprodukt aus einem technischen Gemisch, bestehend aus 45% Tetrahydroabietylalkohol, 40% Dihydroabietylalkohol und 15% Dehydroabietylalkohol, mit ca. 100 Mol Aethylenoxid (Erwichungspunkt ca. 45°) auf das bewegte Wirbelbett gedüst. Im Laufe von wenigen Minuten ist eine

Agglomeration des Pulvers zu groberen Agglomeraten festzustellen. Das auf diese Weise erzeugte staubarme, rieselfähige und formstabile Farbstoffgranulat hat folgende Korngrössenverteilung:

Teilchen <50 µm : 1%
50 µm—2000 µm : 88%
> 2000 µm : 11%

Das Ueberkorn (grösser als 2000 µm) kann gegebenenfalls zerkleinert werden und als Gutkorn abgeführt bzw. als Feingut/Unterkorn (kleiner als 50 µm) mit dem restlichen Feingut wieder der Wirbelschicht zugeführt werden.

Weitere Granulat-Daten:
Schüttgewicht/Stampfvolumen (Din 53'194): 800 g/l
Staubtest-Note: 4
Löslichkeit (g/l bei 100°) : 80
(g/l bei 20°) : 20

Zusammensetzung des Endproduktes:
(390 g Gutkorn von 50 bis 2000 µm Korngrösse)
ca. 10% Granulierhilfsmittel
ca. 77,5% Rohfarbstoff (inklusiv Restfeuchte)
4,5% Natriumsulfat
8% Dextrin.

Beispiel 2:

Im Wirbelbett wird ein homogen gemischtes pulverförmiges Gemenge folgender Zusammensetzung vorgelegt:

80 Teile des Farbstoffes (inklusive Restfeuchte) der Formel

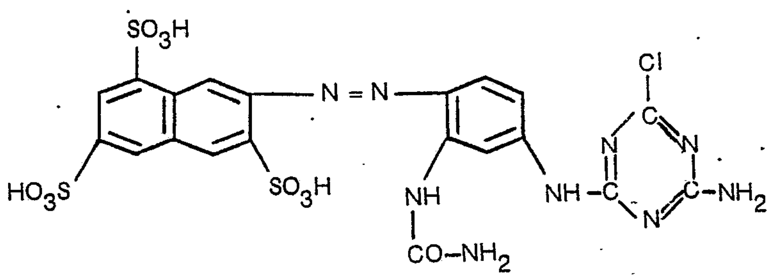

15 Teile des Granulierhilfsmittels aus dem Kondensationsprodukt aus Oleyalkohol mit 80 Mol Aethylenoxid (Erweichungspunkt 50°),
3 Teile eines Kondensationsproduktes aus Naphthalinsulfonsäure und Formaldehyd,
2 Teile Trinatriumpolyphosphat.

Die Wirbelschicht wird durch Zuströmung warmer Luft (60° ± 5°) von unten langsam aufgeheizt. Schon während der Aufheizphase beginnt die Agglomeration und sobald das ganze Wirbelbett in gut agglomerierten granuliertem Zustand vorliegt, wird aus dem Wirbelbett das Granulat abgezogen. Das Wirbelbett wird jetzt über ein Förderrohr ins Zentrum mit weiterem pulverförmigen Gemenge versetzt um die Granulatproduktion kontinuierlich zu führen. Gegebenenfalls wird zur Einhaltung der gewünschten Zusammensetzung die im Granulat verbleibende Restfeuchte im abgezogenen Produkt periodisch oder fortwährend überwacht.

Das erhaltene staubarme, rieselfähige und formstabilie Farbstoffgranulat wies folgende Kenndaten auf:

—Korngrössenverteilung:
Teilchen <50 µm : 2%
50 µm—2000 µm : 78%
>2000 µm : 20%

Das Ueberkorn kann gegebenenfalls zerkleinert werden und als Gutkorn abgeführt bzw. als Feingut wieder der Wirbelschicht zugeführt werden.

—Schüttgewicht/Stampfvolumen: 720 g/l
—Staubtest-Note : 4
—Löslichkeit (g/l bei 100°) : 80
(g/l bei 20°) : 30

Verwendet man anstelle der in den obigen Beispielen angegebenen Granulierhilfsmittel entsprechende Mengen der in folgender Tabelle A aufgeführten Granulierhilfsmittel bei im übrigen gleicher Arbeitsweise, so erhält man ebenbürtige Granulate mit hohem Schüttgewicht.

TABELLE A

| Beispiel Nr. | Granulierhilfsmittel |
|---|---|
| 3 | Kondensationsprodukt aus Oelsäure und 20 Mol Aethylenoxid |
| 4 | Gemisch aus dem Kondensationsprodukt aus Oelsäure und 20 Mol Aethylenoxid Harnstoff Mischverhältnis 80:20 |
| 5 | Kondensationsprodukt aus Stearylalkohol und 35 Mol Aethylenoxid |
| 6 | Polyvinylpyrrolidon und Harnstoff (20:80) |

Beispiel 7 bis 19:

Verfährt man gemäss der Arbeitsweise der vorstehenden Beispiele 1 und 2, verwendet jedoch die in der folgenden Tabelle B angegebenen Farbstoffe, so erhält man Granulate, die ähnliche Eigenschaften aufweisen.

TABELLE B

| Beispiel Nr. | |
|---|---|
| 7 | 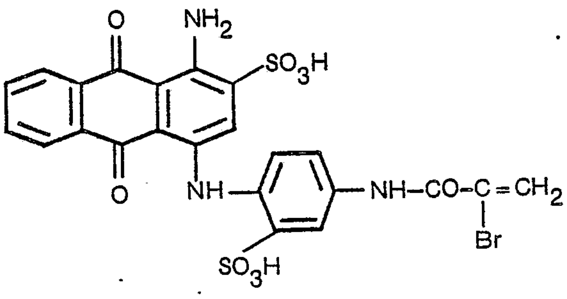 |
| 8 | 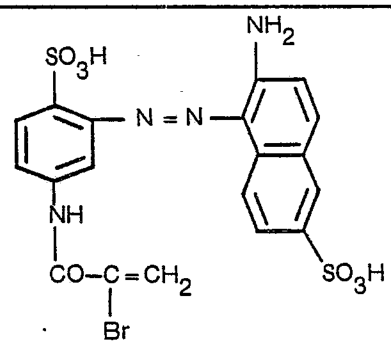 |
| 9 | 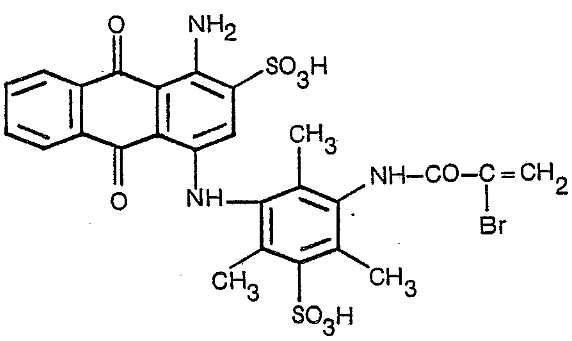 |

| Beispiel Nr. | |
|---|---|
| 10 | 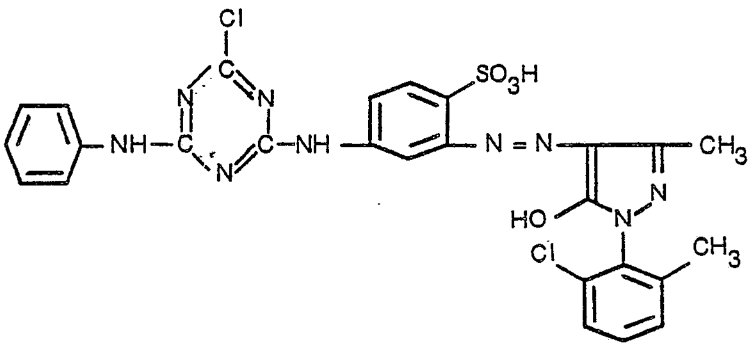 |
| 11 | 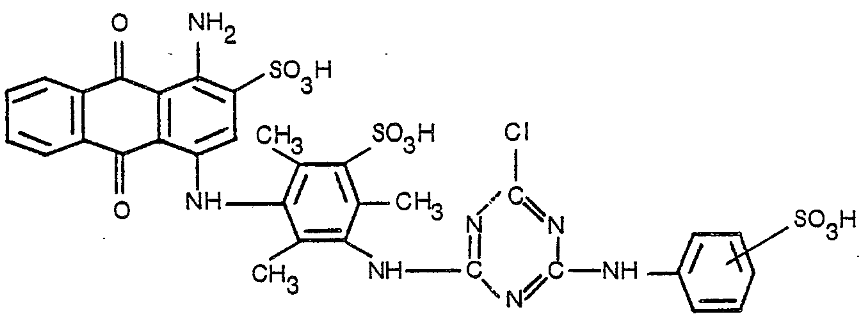 |
| 12 | 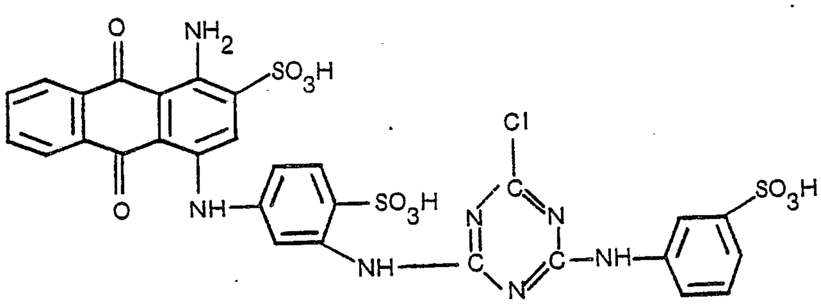 |
| 13 | 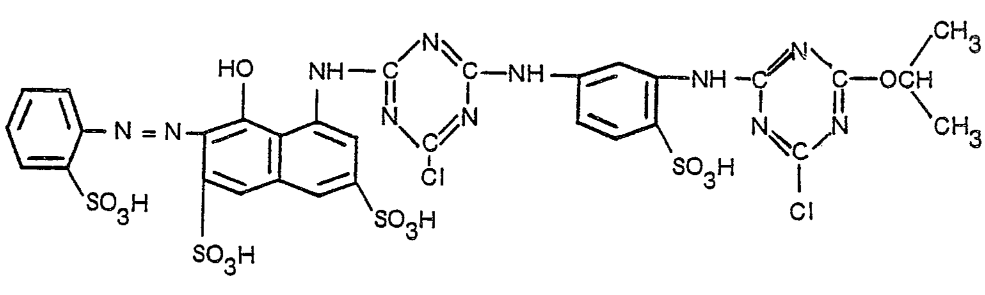 |

| Beispiel Nr. | |
|---|---|
| 14 | 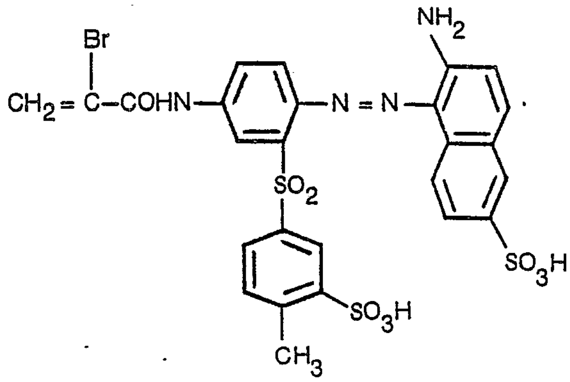 |
| 15 | 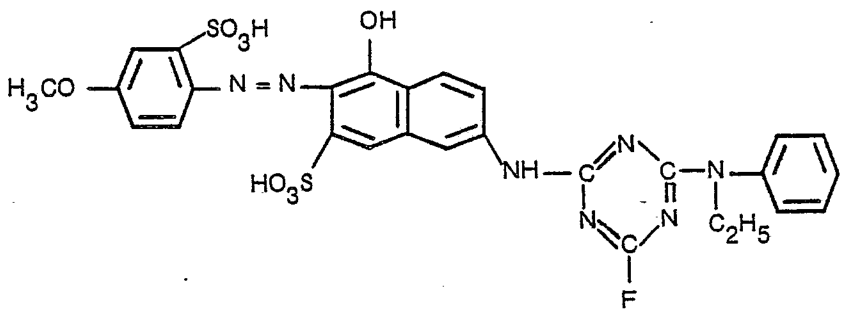 |
| 16 | 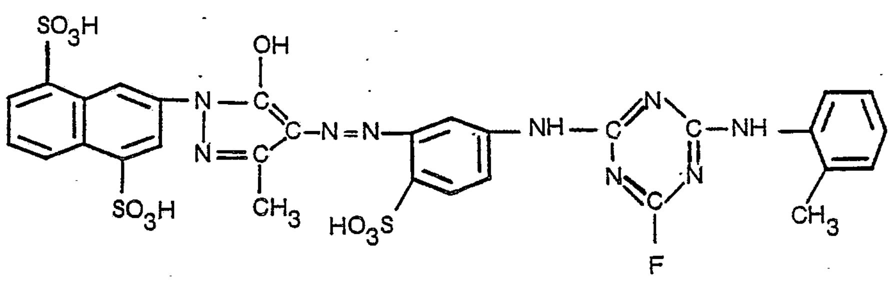 |
| 17 | 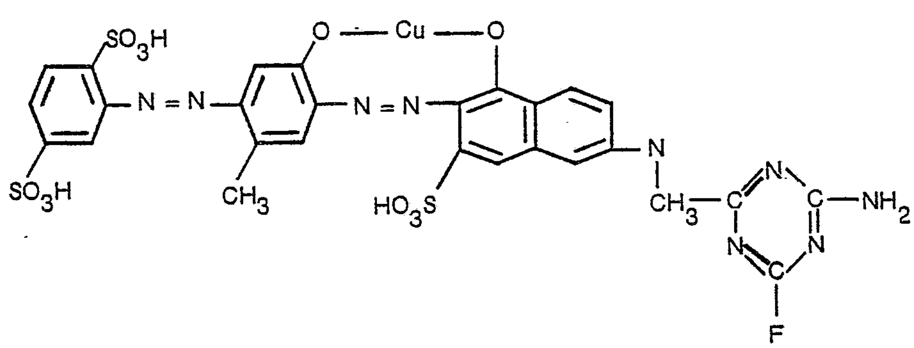 |

| Beispiel Nr. | |
|---|---|
| 18 | 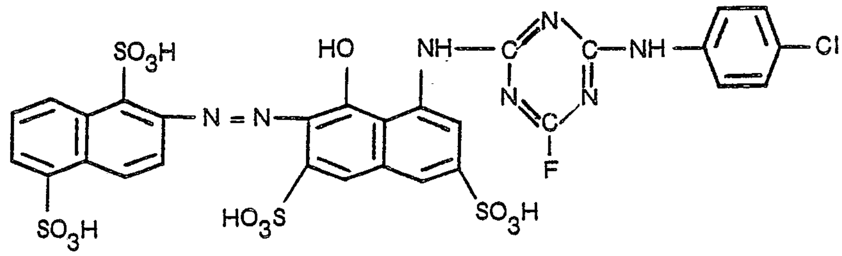 |
| 19 | 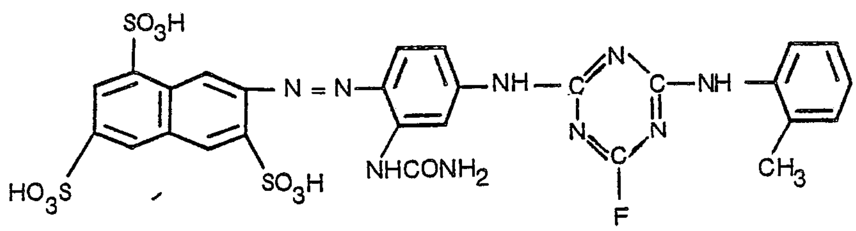 |

Beispiele 20 bis 31:

Verwendet man anstelle der in den vorstehenden Beispielen verwendeten Farbstoffe die in den folgenden Tabellen C bis E angegebenen Metallkomplexfarbstoffe, bei gleicher Arbeitsweise, so erhält man Granulate ähnlicher Zusammensetzung, die ähnliche Eigenschaften aufweisen.

In der Tabelle C sind 1:2-Komplexe aufgeführt, die 2 Moleküle des gleichen Farbstoffes an 1 Metallatom komplex gebunden, enthalten.

TABELLE C

| I | II | III | IV |
|---|---|---|---|
| Beispiel Nr. | Metall | Farbstoff | Farbton auf Wolle |
| 20 | Co | 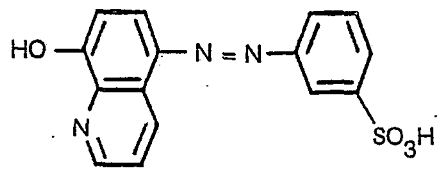 | Braun |
| 21 | Co | 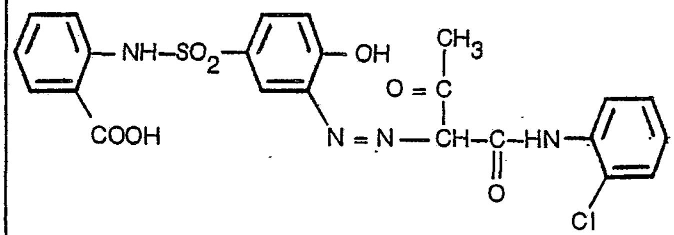 | Gelb |

In der Tabelle D sind 1:2-Mischkomplexe aufgeführt, die je 1 Molekül eines Farbstoffes der Kolonne III und der Kolonne IV an 1 Metallatom der Kolonne II komplex gebunden enthalten.

TABELLE D

| I | II | III | IV | V |
|---|---|---|---|---|
| Beispiel Nr. | Metall | Farbstoff | Farbstoff | Farbton auf Wolle |
| 22 | Cr | 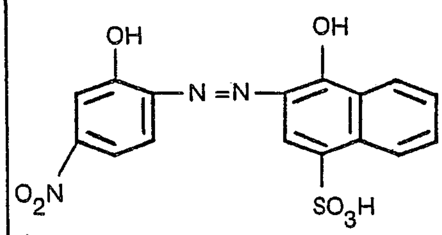 | 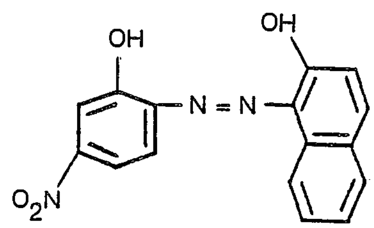 | Marine-blau |
| 23 | Fe | 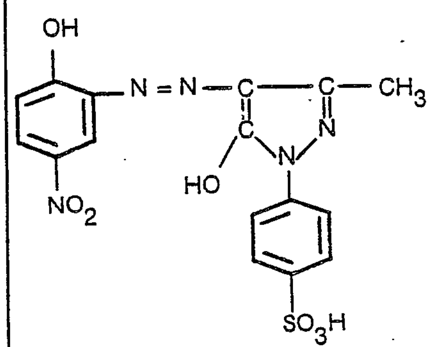 | 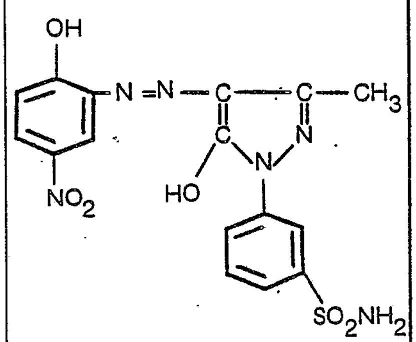 | Braun |
| 24 | Cr | 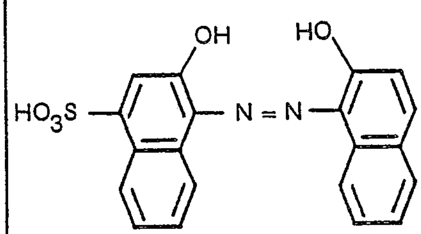 | 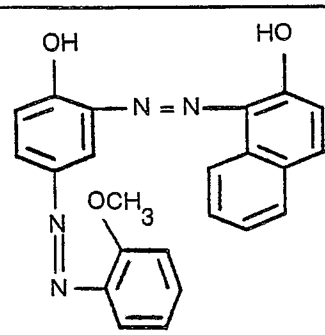 | Schwarz |
| 25 | Cr | 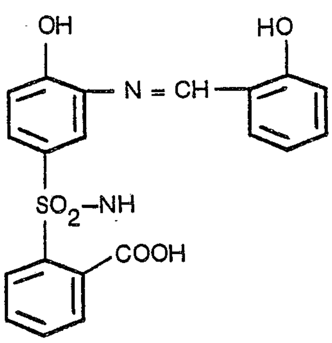 | 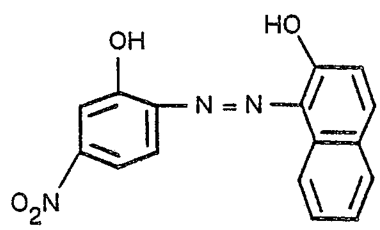 | Grün |

| I | II | III | IV | V |
|---|---|---|---|---|
| Beispiel Nr. | Metall | Farbstoff | Farbstoff | Farbton auf Wolle |
| 26 | Cr | 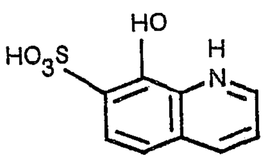 | 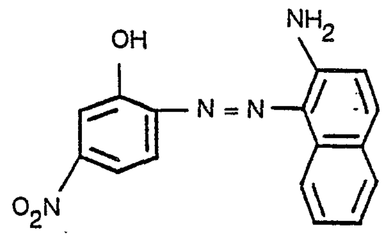 | Grün |

In Tabelle E sind 1:1-Komplexe aufgeführt, die 1 Molekül des Farbstoffes an 1 Metallatom komplex gebunden, enthalten.

TABELLE E

| I | II | III | IV |
|---|---|---|---|
| Beispiel Nr. | Metall | Farbstoff | Farbton auf Wolle |
| 27 | Fe | 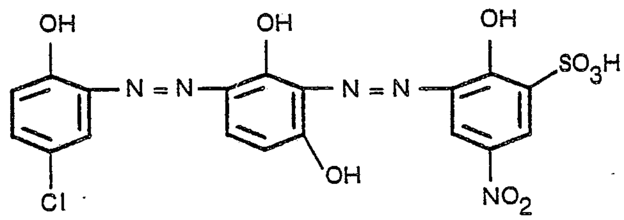 | Braun |
| 28 | Cr | 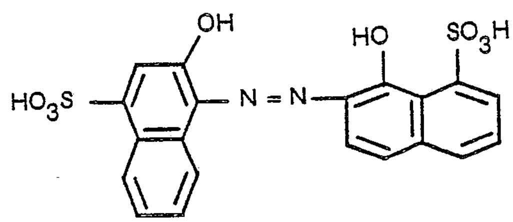 | Blau |
| 29 | Cr | 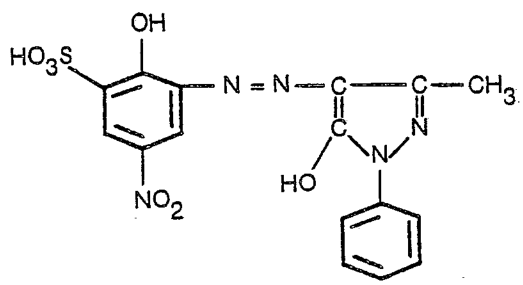 | Orange |
| 30 | Ni | 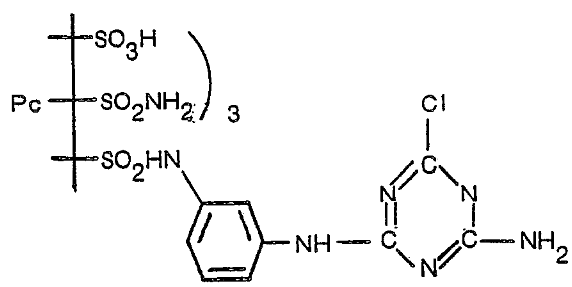 | Türkis |
| 31 | Cu | 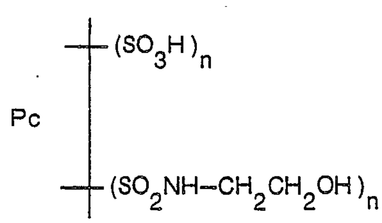 n = 1–2 | Türkis |

Pc bedeutet Phthalocyanin

**Patentansprüche**

1. Verfahren zur Herstellung von wasserlöslichen Farbstoffgranulaten, dadurch gekennzeichnet, dass man mindestens ein Granulierhilfsmittel mit einem Erweichungspunkt bzw. Erweichungsbereich zwischen 30 und 150°C, bestehend aus

a) mindestens einer Verbindung der Formel I

$$A-(CH_2CH_2O)_n-H \qquad (I)$$

in der A die Gruppe R—O— oder

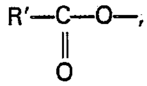

R einen 8 bis 22 Kohlenstoffatome aufweisenden aliphatischen oder alicyclischen Kohlenwasserstoffrest, R′ einen 8 bis 22 Kohlenstoffatome aufweisenden aliphatischen Kohlenwasserstoffrest, und n 10 bis 200, bedeuten, oder

b) einer Mischung aus einer Verbindung der Formel II

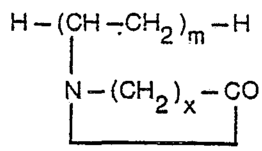

(II)

in der m 50 bis 500 und x 3 bis 5 bedeuten, mit einer Verbindung der Formel III

$$R_1-NH-CO-NH-R_1 \qquad (III)$$

in der $R_1$ unabhängig voneinander Wasserstoff oder Methyl bedeutet, oder

c) einer Mischung einer Verbindung der Formel I mit mindestens einer Verbindung der Formel II oder III auf ein Wirbelsett, enthaltend mindestens einen wasserlöslichen Farbstoff und gegebenenfalls das Granulierhilfsmittel und/oder weitere Zusätze, sprüht, wobei das Granulierhilfsmittel bzw. -hilfsmittelgemisch vor der Zugabe und/oder während des Aufenthaltes im Wirbelbett über seinen Erweichungspunkt bzw. Erweichungsbereich erwärmt wird.

2. Verfahren nach Anspruch 1, dadurch gekennzeichnet, dass man als Granulierhilfsmittel eine eutektische Mischung aus mindestens zwei verschiedenen Verbindungen der Formel I oder eine Verbindung der Formel I mit einer Verbindung der Formel II oder III oder ein Gemisch einer Verbindung der Formel II mit einer Verbindung der Formel III verwendet.

3. Verfahren nach den Ansprüchen 1 und 2, dadurch gekennzeichnet, dass man als Granulierhilfsmittel eine Verbindung der Formel I verwendet, in der n 20 bis 150 bedeutet, und A, R und R′ die im Anspruch 1 angegebene Bedeutung haben.

4. Verfahren nach den Ansprüchen 1 bis 3, dadurch gekennzeichnet, dass man als Granulierhilfsmittel eine Verbindung der Formel I verwendet, in der R einen 8 bis 22 Kohlenstoffatome aufweisenden aliphatischen Kohlenwasserstoffrest und A, R′ und n die im Anspruch 1 angegebenen Bedeutungen haben.

5. Verfahren nach den Ansprüchen 1 bis 4, dadurch gekennzeichnet, dass man als Granulierhilfsmittel eine Verbindung der Formel I verwendet, in der A die Gruppe R—O—, R einen 8 bis 22 Kohlenstoffatome aufweisenden, geradkettigen Kohlenwasserstoffrest und n 35 bis 80 bedeuten.

6. Verfahren nach Anspruch 5, dadurch gekennzeichnet, dass man als Granulierhilfsmittel eine Verbindung der Formel I verwendet, in der A die Gruppe R—O—, R einen 18 Kohlenstoffatome aufweisenden, ungesättigten Kohlenwasserstoffrest und n 80 bedeuten.

7. Verfahren nach Anspruch 5, dadurch gekennzeichnet, dass man als Granulierhilfsmittel eine Verbindung der Formel I verwendet, in der A die Gruppe R—O—, R einen 18 Kohlenstoffatome aufweisenden, gesättigten Kohlenwasserstoffrest und n 35 bedeuten.

8. Verfahren nach den Ansprüchen 1 bis 3, dadurch gekennzeichnet, dass man als Granulierhilfsmittel eine Verbindung der Formel I verwendet, in der A die Gruppe R—O—, und R einen 8 bis 22 Kohlenstoffatome aufweisenden alicyclischen Kohlenwasserstoffrest bedeuten, und n die im Anspruch 1 angegebene Bedeutung hat.

9. Verfahren nach Anspruch 8, dadurch gekennzeichnet, dass man als Granulierhilfsmittel eine Verbindung der Formel I verwendet, in der A die Gruppe R—O—, R einen 8 bis 22 Kohlenstoffatome aufweisenden alicyclischen Kohlenwasserstoffrest und n 100 bedeuten.

10. Verfahren nach Anspruch 9, dadurch gekennzeichnet, dass man als Granulierhilfsmittel Hydroabietylalkohol veräthert mit 100 Mol Aethylenoxid verwendet.

11. Verfahren nach den Ansprüchen 1 bis 4, dadurch gekennzeichnet, dass man als Granulierhilfsmittel eine Verbindung der Formel I verwendet, in der A die Gruppe

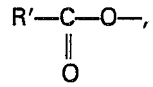

R' einen 8 bis 22 Kohlenstoffatome aufweisenden, aliphatischen geradkettigen Kohlenwasserstoffrest, und n 10 bis 30 bedeuten.

12. Verfahren nach Anspruch 11, dadurch gekennzeichnet, dass man als Granulierhilfsmittel der Formel I das Kondensationsprodukt aus Oelsäure und 20 Mol Aethylenoxid verwendet.

13. Verfahren nach den Ansprüchen 1 bis 3, dadurch gekennzeichnet, dass man als Granulierhilfsmittel ein Gemisch aus einer Verbindung der Formel I, worin A die Gruppe

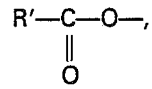

R' einen 8 bis 22 Kohlenstoffatome aufweisenden, ungesättigten, geradkettigen Kohlenwasserstoffrest und n 10 bis 30 bedeuten, mit Harnstoff, gegebenenfalls im Gemisch mit schmelzpunktherabsetzenden Zusätzen, verwendet.

14. Verfahren nach Anspruch 13, dadurch gekennzeichnet, dass man als Granulierhilfsmittel ein Gemisch aus einem Kondensationsprodukt aus Oelsäure und 20 Mol Aethylenoxid mit Harnstoff, gegebenenfalls im Gemisch mit schmelzpunktherabsetzenden Zusätzen, verwendet

15. Verfahren nach den Ansprüchen 1 und 2, dadurch gekennzeichnet, dass man als Granulierhilfsmittel ein Gemisch aus einer Verbindung der Formel II, worin × 3 ist, und m die in Anspruch 1 angegebene Bedeutung hat, mit Harnstoff, gegebenenfalls im Gemisch mit schmelzpunktherabsetzenden Zusätzen, verwendet.

16. Verfahren nach den Ansprüchen 1 bis 15, dadurch gekennzeichnet, dass das Granulierhilfsmittel einen Erweichungspunkt bzw. Erweichungsbereich zwischen 40 und 100°C aufweist.

17. Verfahren nach den Ansprüchen 1 bis 16, dadurch gekennzeichnet, dass das Granulierhilfsmittel in Mengen von 5 bis 50, vorzugsweise 10 bis 30 Gew.-%, bezogen auf den Farbstoff verwendet wird.

18. Verfahren nach den Ansprüchen 1 bis 17, dadurch gekennzeichnet, dass man als weitere Zusätze Coupagemittel, Netzmittel, Dispergatoren und/oder Staubbindemittel verwendet.

19. Verfahren nach Ansprüchen 1 bis 18, dadurch gekennzeichnet, dass die weiteren Zusätze in Gesamtmengen von 0,1 bis 50 Gew.-%, bezogen auf das Granulat zugegeben werden.

20. Verfahren nach den Ansprüchen 1 bis 19, dadurch gekennzeichnet, dass man wasserlösliche Faserreaktivfarbstoffe verwendet.

21. Verfahren nach Anspruch 1, dadurch gekennzeichnet, dass man gleichzeitig mit dem Granulierhilfsmittel pulverförmigen Farbstoff und/oder weitere Zusätze in das Wirbelbett sprüht.

22. Verfahren nach Anspruch 1, dadurch gekennzeichnet, dass das Wirbelbett durch einen Gasstrom erzeugt wird, der eine Eingangstemperatur von 35 bis 300°C aufweist.

23. Verfahren nach Anspruch 1, dadurch gekennzeichnet, dass die Temperatur im Wirbelbett 50 bis 100°C beträgt.

24. Verfahren nach Anspruch 1, dadurch gekennzeichnet, dass man das Verfahren kontinuierlich durchführt und die formulierten Farbstoffteilchen, die einen Durchmesser grösser als 5 mm und kleiner als 0,1 mm aufweisen, gegebenenfalls nach Zerkleinerung der Grobanteile direkt in das Wirbelbett zurückführt.

25. Die nach dem Verfahren gemäss den Ansprüchen 1 bis 24 erhaltenen Granulate von wasserlöslichen Farbstoffen.

26. Granulate hergestellt nach dem Verfahren gemäss den Ansprüchen 1 bis 24, enthaltend insgesamt 5 bis 50 Gew.-%, bezogen, auf den Farbstoff, mindestens eines Granulierhilfsmittels der Formel I, oder einer Mischung aus mindestens zwei Verbindungen der Formeln I, II oder III.

27. Verwendung der gemäss Anspruch 26 erhaltenen Granulate zum Färben von Textilmaterialien aus wässriger Färbeflotte.

**Revendications**

1. Procédé de préparation de granules de colorants solubles dans l'eau, caractérisé par le fait qu'on pulvérise au moins un adjuvant de granulation ayant un point de ramollissement ou une plage de ramollissement comprise entre 30 et 150°C, constitué

a) par au moins un composé de formule I

$$A{-}(CH_2CH_2O)_n{-}H \qquad (I)$$

dans laquelle A représente le groupe R—O— ou

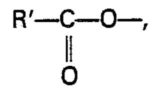

R étant un reste hydrocarboné aliphatique ou alicyclique ayant 8 à 22 atomes de carbone; R′ étant un reste hydrocarboné aliphatique ayant 8 à 22 atomes de carbone, et n valant 10 à 200, ou bien

b) par un mélange d'un composé de formule II

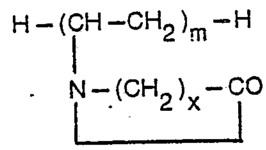

(II)

dans laquelle m vaut 50 à 500 et x vaut 3 à 5, avec un composé de formule III

$$R_1{-}NH{-}CO{-}NH{-}R_1 \qquad (III)$$

dans laquelle $R_1$ indépendamment l'un de l'autre désignent chacun de l'hydrogène ou le groupe méthyle ou bien

c) par un mélange d'un composé de formule I avec au moins un composé de formule II ou III, sur un lit fluidisé contenant au moins un colorant soluble dans l'eau et éventuellement l'adjuvant de granulation et/ou d'autres additifs, l'adjuvant de granulation ou le mélange d'adjuvants de granulation étant chauffé, avant d'être ajouté et/ou pendant le le séjour dans le lit fluidisé, au-dessus de son point de ramollissement ou de sa plage de ramollissement.

2. Procédé selon la revendication 1, caractérisé par le fait qu'on utilise comme adjuvant de granulation, un mélange eutectique d'au moins deux composés différents de formule I ou bien un composé de formule I avec un composé de formule II ou III, ou bien un mélange d'un composé de formule II avec un composé de formule III.

3. Procédé selon les revendications 1 et 2, caractérisé par le fait qu'on utilise comme adjuvant de granulation un composé de formule I dans lequel n vaut 20 à 150, et A, R et R′ ont les significations données dans la revendication 1.

4. Procédé selon les revendications 1 à 3, caractérisé par le fait qu'on utilise comme adjuvant de granulation un composé de formule I dans lequel R est un reste hydrocarboné aliphatique ayant 8 à 22 atomes de carbone, et A, R′ et n ont les significations données dans la revendication 1.

5. Procédé selon les revendications 1 à 4, caractérisé par le fait qu'on utilise comme adjuvant de granulation, un composé de formule I dans lequel A est le groupe R—O—; R est un reste hydrocarboné linéaire ayant 8 à 22 atomes de carbone, et n vaut 35 à 80.

6. Procédé selon la revendication 5, caractérisé par le fait qu'on utilise comme adjuvant de granulation, un composé de formule I dans lequel A est le groupe R—O—; R est un reste hydrocarboné insaturé ayant 18 atomes de carbone, et n vaut 80.

7. Procédé selon la revendication 5, caractérisé par le fait qu'on utilise comme adjuvant de granulation un composé de formule I dans lequel A est le groupe R—O—; R est un reste hydrocarboné saturé ayant 18 atomes de carbone, et n vaut 35.

8. Procédé selon les revendications 1 à 3, caractérisé par le fait qu'on utilise comme adjuvant de granulation, un composé de formule I dans lequel A est le groupe R—O—, et R est un reste hydrocarboné alicyclique ayant 8 à 22 atomes de carbone, et n a les significations données dans la revendication 1.

9. Procédé selon la revendication 8, caractérisé par le fait qu'on utilise comme adjuvant de granulation un composé de formule I dans lequel A est le groupe R—O—; R est un reste hydrocarboné alicyclique ayant 8 à 22 atomes de carbone, et n vaut 1000.

10. Procédé selon la revendication 9, caractérisé par le fait qu'on utilise comme adjuvant de granulation l'alcool hydro-abiétylique éthérifié avec 100 moles d'oxyde d'éthylène.

11. Procédé selon les revendications 1 à 4, caractérisé par le fait qu'on utilise comme adjuvant de granulation, un composé de formule I dans laquelle A est le groupe

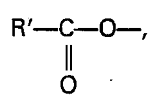

R' est un reste hydrocarboné linéaire aliphatique ayant 8 à 22 atomes de carbone et n vaut 10 à 30.

12. Procédé selon la revendication 11, caractérisé par le fait qu'on utilise comme adjuvant de granulation de formule I, le produit de condensation de l'acide oléique et de 20 moles d'oxyde d'éthylène.

13. Procédé selon les revendications 1 à 3, caractérisé par le fait qu'on utilise comme adjuvant de granulation un mélange d'un composé de formule I dans lequel A est le groupe

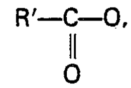

R' est un reste hydrocarboné linéaire non saturé ayant 8 à 22 atomes de carbone et n vaut 10 à 30, avec de l'urée éventuellement en mélange avec des additifs abaissant le point de fusion.

14. Procédé selon la revendication 13, caractérisé par le fait qu'on utilise comme adjuvant de granulation un mélange d'un produit de condensation de l'acide oléique et de 20 moles d'oxyde d'éthylène avec de l'urée éventuellement en mélange avec des additifs abaissant le point de fusion.

15. Procédé selon les revendications 1 et 2, caractérisé par le fait qu'on utilise comme adjuvant de granulation un mélange d'un composé de formule II dans laquelle x vaut 3 et m a la signification donnée dans la revendication 1, avec de l'urée, éventuellement en mélange avec des additifs abaissant le point de fusion.

16. Procédé selon les revendications 1 à 15, caractérisé par le fait que l'adjuvant de granulation présente un point de ramollissement ou une plage de ramollissement compris entre 40 et 100°C.

17. Procédé selon les revendications 1 à 16, caractérisé par le fait que l'adjuvant de granulation est utilisé à raison de 5 à 50 de préférence de 10 à 30% en poids par rapport au colorant.

18. Procédé selon les revendications 1 à 17, caractérisé par le fait qu'on utilise comme autres additifs, des produits de coupage, des agents mouillants, des dispersants et/ou d'autres liants de poussière.

19. Procédé selon les revendications 1 à 18, caractérisé par le fait que les autres additifs sont ajoutés en une quantité totale de 0,1 à 50% en poids par rapport aux granules.

20. Procédé selon les revendications 1 à 19, caractérisé par le fait qu'on utilise des colorants réactifs avec les fibres solubles dans l'eau.

21. Procédé selon la revendication 1, caractérisé par le fait qu'on pulvérise dans le lit fluidisé, en même temps que l'adjuvant de granulation, le colorant pulvérulent et/ou les autres additifs.

22. Procédé selon la revendication 1, caractérisé par le fait que le lit fluidisé est provoqué par un courant gazeux qui présente une température à l'entrée de 35 à 300°C.

23. Procédé selon la revendication 1, caractérisé par le fait que la température dans le lit fluidisé est de 50 à 100°C.

24. Procédé selon la revendication 1, caractérisé par le fait qu'on effectue le procédé en continu et qu'on renvoie directement dans le lit fluidisé les particules de colorants formulées qui ont un diamètre supérieur à 5 mm et inférieur à 0,1 mm, éventuellement après avoir broyé les grosses particules.

25. Granules de colorants solubles dans l'eau obtenus avec le procédé selon les revendications 1 à 24.

26. Granules préparés avec le procédé selon les revendications 1 à 24, contenant en tout 5 à 50% en poids, par rapport au colorant d'au moins un adjuvant de granulation de formule I, ou d'un mélange d'au moins deux composés de formules I, II ou III.

27. Utilisation des granules obtenus selon la revendication 26 pour teindre des matières textiles en bain tinctorial aqueux.

**Claims**

1. A process for the preparation of granulates of water-solbule dyes, which process comprises spraying at least one granulating auxiliary having a softening point or softening range between 30 and 150°C, said granulating auxiliary consisting of

a) at least one compound of the formula I

$$A—(CH_2CH_2O)_n—H \qquad (I)$$

in which A is the R—O— or

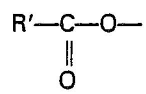

group, wherein R is an aliphatic or alicyclic hydrocarbon radical having 8 to 22 carbon atoms and R' is an aliphatic hydrocarbon radical having 8 to 22 carbon atoms, and n is 10 to 200, or

b) a mixture of a compound of the formula II

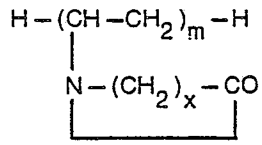

(II)

in which m is 50 to 500, and x is 3 to 5, and a compound of the formula III

$$R_1—NH—CO—NH—R_1 \quad (III)$$

in which each $R_1$ independently of the other is hydrogen or methyl, or

c) a mixture of a compound of the formula I and at least one compound of the formula II or III, onto a fluidised bed containing at least one water-soluble dye and optionally the granulating auxiliary and/or further auxiliaries, said granulating auxiliary or mixture thereof being heated to above its softening point or softening range before the addition and/or during the residence time in said fluidised bed.

2. A process according to claim 1, wherein the granulating auxiliary used is a eutectic mixture of at least two different compounds of the formula I, or a compound of the formula I with a compound of the formula II or III, or a mixture of a compound of the formula II and a compound of the formula III.

3. A process according to either claim 1 or claim 2, wherein the granulating auxiliary used is a compound of the formula I, in which n is 20 to 150, and A, R and R' have the meanings defined in claim 1.

4. A process according to any one of claims 1 to 3, wherein the granulating auxiliary used is a compound of the formula I, in which R is an aliphatic hydrocarbon radical containing 8 to 22 carbon atoms, and A, R' and n have the meanings defined in claim 1.

5. A process according to any one of claims 1 to 4, wherein the granulating auxiliary used is a compound of the formula I, in which A is the R—O— group, R is a straight chain hydrocarbon radical containing 8 to 22 carbon atoms, and n is 35 to 80.

6. A process according to claim 5, wherein the granulating auxiliary used is a compound of the formula I, in which A is the R—O— group, R is an unsaturated hydrocarbon radical containing 18 carbon atoms, and n is 80.

7. A process according to claim 5, wherein the granulating auxiliary used is a compound of the formula I, in which A is the R—O— group, R is a saturated hydrocarbon radical containing 18 carbon atoms, and n is 35.

8. A process according to any one of claims 1 to 3, wherein the granulating auxiliary used is a compound of the formula I, in which A is the R—O— group, and R is an alicyclic hydrocarbon radical containing 8 to 22 carbon atoms, and n has the meaning defined in claim 1.

9. A process according to claim 8, wherein the granulating auxiliary used is a compound of the formula I, in which A is the R—O— group, R is an alicyclic hydrocarbon radical containing 8 to 22 carbon atoms, and n is 100.

10. A process according to claim 9, wherein the granulating auxiliary used is hydroabietyl alcohol etherified with 100 moles of ethylene oxide.

11. A process according to any one of claims 1 to 4, wherein the granulating auxiliary used is a compound of the formula I, in which A is the

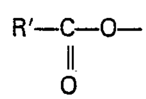

group, R' is an aliphatic straight chain hydrocarbon radical containing 8 to 22 carbon atoms, and n is 10 to 30.

12. A process according to claim 11, wherein the granulating auxiliary of the formula I used is the condensation product from oleic acid and 20 moles of ethylene oxide.

13. A process according to any one of claims 1 to 3, wherein the granulating auxiliary used is a mixture of a compound of the formula I, in which A is the

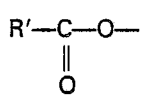

group, R' is an unsaturated, straight chain hydrocarbon radical containing 8 to 22 carbon atoms, and n is 10 to 30, and urea, optionally in admixture with auxiliaries which lower the melting point.

14. A process according to claim 13, wherein the granulating auxiliary used is a mixture of a condensation product of oleic acid and 20 moles of ethylene oxide and urea, optionally in admixture with auxiliaries which lower the melting point.

15. A process according to either claim 1 or claim 2, wherein the granulating auxiliary used is a mixture

of a compound of the formula II, in which x is 3, and m has the meaning defined in claim 1, and urea, optionally in admixture with auxiliaries which lower the melting point.

16. A process according to any one of claims 1 to 15, wherein the granulating auxiliary used has a softening point or softening range of between 40 and 100°C.

17. A process according to any one of claims 1 to 16, wherein the granulating auxiliary is used in amounts of 5 to 50, preferably 10 to 30, per cent by weight, based on the dye.

18. A process according to any one of claims 1 to 17, wherein the further auxiliaries used are extenders, wetting agents, dispersants and/or dust inhibitors.

19. A process according to any one of claims 1 to 18, wherein the further auxiliaries are added in a total amount of 0.1 to 50 per cent by weight, based on the granulate.

20. A process according to any one of claims 1 to 19, which comprises the use of water-soluble fibre reactive dyes.

21. A process according to claim 1, which comprises spraying pulverulent dye and/or further auxiliaries simultaneously with the granulating auxiliary into the fluidised bed.

22. A process according to claim 1, wherein the fluidised bed is produced by a stream of gas which has an inlet temperature of 35 to 300°C.

23. A process according to claim 1, wherein the temperature in the fluidised bed is 50 to 100°C.

24. A process according to claim 1, which process is carried out continuously and the formulated dye particles which have a diameter greater than 5 mm and smaller than 0.1 mm are fed back directly to the fluidised bed, if desired, after comminution of the large particles.

25. The water-soluble dye granulates obtained by a process according to any one of claims 1 to 24.

26. Granulates prepared by a process according to any one of claims 1 to 24, which contain a total of 5 to 50 per cent by weight, based on the dye, of at least one granulating auxiliary of the formula I, or of a mixture of at least two compounds of the formulae I, II or III.

27. Use of the granulates obtained according to claim 26 for dyeing textile materials from an aqueous dye bath.

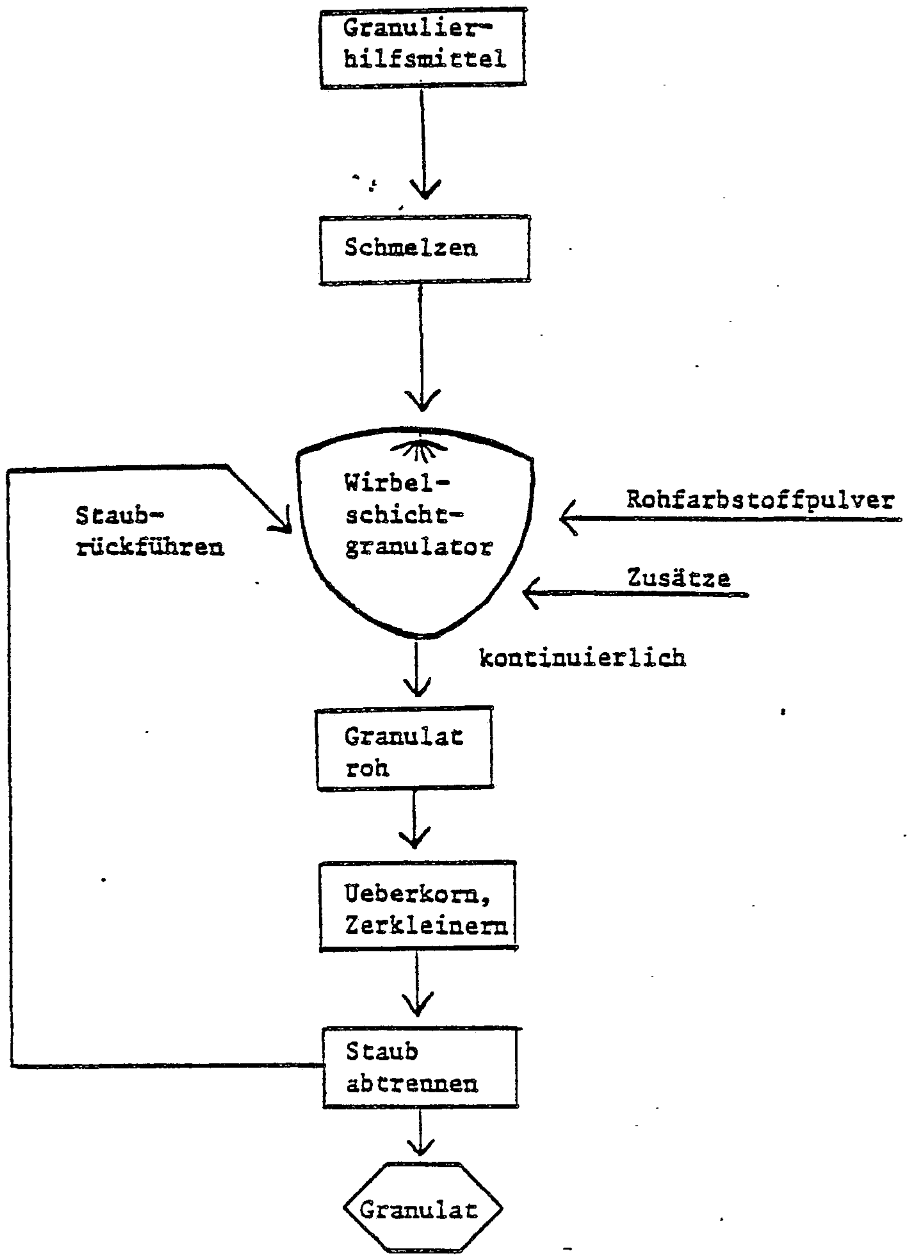
Granulier-
hilfsmittel
Schmelzen
Wirbel-
schicht-
granulator
Staub-
rückführen
Rohfarbstoffpulver
Zusätze
kontinuierlich
Granulat
roh
Ueberkorn,
Zerkleinern
Staub
abtrennen
Granulat